# EUROPEAN PATENT SPECIFICATION

(11) **EP 1 443 371 B1**
(45) Date of publication and mention of the grant of the patent: **02.07.2008**
(21) Application number: 02025327.4
(22) Date of filing: 13.11.2002
(51) Int. Cl.: G05B 13/02, G05B 15/02

(54) **Process to automatically optimize the performance of a waste water treatment plant**
Prozess zur automatischen Optimierung der Leistung einer Abwasserreinigungsanlage
Procédé pour l'optimisation automatique de performance d'une installation d'épuration des eaux usées

(43) Date of publication of application: 04.08.2004
(73) Proprietor: Ashland Licensing and Intellectual Property LLC, Dublin, OH 43017 (US)
(72) Inventor: Benghozi, Eric, 44700 Orvault (FR); Steiner, Norbert, 63755 Alzenau (DE)
(74) Representative: Wolff, Felix

(56) References cited:
- DE-C- 4 304 676
- US-A- 5 589 068
- US-B1- 6 296 766
- US-B1- 6 408 227
- MERKEL N ET AL: "INNOVATIVE ABB INFORMATION SYSTEMS SUPPORT OPERATIONS MANAGEMENT OFA GERMAN SEWAGE PLANT" ABB REVIEW, ABB ASEA BROWN BOVERI, ZURICH, CH, no. 6/7, 1996, pages 4-11, XP000636211 ISSN: 1013-3119

## Description

The present invention is related to a process to automatically provide recommendations how to optimize the performance of a waste water treatment plant with a data communication unit and a data concentration unit, whereas the data communication unit and the data concentration unit are connected by data transfer unit.

Waste water treatment plants are complex systems that have to deal with constantly changing inflow conditions. Consequently, theses waste water treatment plants are difficult to operate. Nowadays many waste water treatment plants are operated based on the operators knowledge and feelings, because in lot of cases the relevant data needed for an appropriate operation is not known and/or if the data is known the operator cannot interpret the data correctly. An optimization especially in terms of cost takes rarely place due to the above mentioned reasons.

Merkel et al. relates to an information system of a sewage plant using on-line simulation and an expert system running in real-time which supports the process analysis and provides suggestions for modifying the operation (Merkel et al., Innovative ABB information systems support operations management of a German sewage plant, ABB Review 1996 (6/7), 4-11).

US 6,296,766 B1 relates to a method for controlling an anaerobic digester system which user a cumulative data base for enhanced monitoring of the digester process.

In order to get a better understanding of waste water treatment plants, some models have been developed that try to simulate these waste water treatment plants. One of these models is the "Activated sludge models ASM1, ASM2 and ASM3 published by IWA Publishing in 2000. However, firstly these models are restricted to the biological step of the waste water treatment plant, so that they do not simulate the entire waste water treatment plant and secondly with the models a waste water treatment plant can be simulated but not operated. The model does not give the operator recommendations how to operate his waste water treatment plant, especially not on a basis as needed.

It is therefore the objective of the present invention to provide a process that automatically comes up with recommendations how to operate and optimize the waste water treatment plant if needed.

The problem is solved by a process to automatically provide recommendations how to optimize the performance of a waste water treatment plant with a data communication unit and a data concentration unit, whereas the data communication unit and the data concentration unit are connected by data transfer unit, the process comprising an unlimited repetition of the following steps:
a) Input of plant- and process- relevant data into the data communication unit,
b) Transfer of the process-relevant data from the data communication unit to the data concentration unit,
c) Calculation of process relevant parameters and/or indices in the data concentration unit with the data according to step a),
d) Evaluation of the process relevant parameters and/or indices in comparison to the data stored in the data concentration unit,
e) Provision of recommendations based on step d) and
f) Transfer of recommendations from the concentration unit to the data communication unit,
characterized in that the step of plant- and process-relevant data comprises:
a. Type of treatment steps in the waste water treatment plant,
b. Food/Mass ratio,
c. Hydraulic Load,
d. Dry solids,
e. Speeds of clarifiers,
f. Recirculation flow rate,
g. Pollution, especially oxygen demand, phosphor, nitrogen and/or
h. Sludge age,
wherein the recommendations are based on a quantitative analysis and also on fuzzy rules based on a qualitative analysis.

A data communication unit according to the present invention is each and every computer with a CPU as known by a person skilled in the art.

The data communication unit is connected with a data concentration unit via a data transfer unit. The data concentration unit is each and every stand alone unit on which data can be stored and executed electronically. The data concentration unit can also be a network with a network data base. This embodiment of the present invention has the advantage that several parts of the network and consequently several data bases can be used for the evaluation.

With the data transfer unit according to the present invention data can be transferred from the data communication unit to the data concentration unit. The data transfer unit can be for example a network, on which data or speech can be transferred.

With the data communication unit the data needed for the evaluation is entered. This is preferably done by a graph shown on the data communication unit that depicts the plant. The data is preferably inserted directly into the graph. The insertion can be done automatically by a routine data transfer from different measuring devices of the waste water treatment plant directly into the data communication unit and/or manually. The depiction of the waste water treatment plant covers preferably mostly all possible configurations of a municipal or industrial waste water treatment plant. Normally it contains four main unit; i.e. primary treatment, biological step with an anaerobic zone, a mot sludge digestion and dewatering. A process that supports the data insertion and the depiction of the waste water treatment plant requests information for all these units. With answering questions, the software understand the plant process. In a preferred embodiment of the present invention, the process automatically integrates the data as needed and modifies the underlying equations.

The input data comprises:
a. type of treatment steps in the waste water treatment plant
b. F/M ratio
c. Hydraulic load
d. Dry solids
e. Speed of clarifiers
f. Recirculation flow rate
g. Pollution, especially oxygen demand, phosphor, nitrogen and/or
h. Sludge age.

This data is transferred from the data communication unit to the data concentration unit via the data transfer unit. In the data transfer unit the inserted data is first of all processed. This is for example done by the calculation of indices and/or parameters which are relevant for waste water treatment plant, for example F/M ratio, relations with nitrogen contents, sludge formation, biological concentrations increase that take into account the incoming polution and plant capacities. The indices and/or parameters are subsequently compared with data stored in the data concentration unit. This data can be historical data form the same plant, data based on personal experience and/or benchmark data from other comparable plants.

Based upon the outcome of this comparison, the recommendations for example how to alter certain parameters or how additives to the waste water treatment plant should be changed are provided. These recommendations are not only based on a quantitative analysis, but also on fuzzy rules based on a qualitative analysis.

Based upon the calculated indices and/or parameters, the process will preferably also provide information what performance of individual treatment steps and/or the entire plant can be expected.

Preferably the recommendations comprise a list of aspects how to improve a certain treatment step and/or how a single modification of a certain parameter will influence the operation of the entire plant.

The transferred data is preferably stored in the data concentration unit to improve the data base of the historical data and/or to be used as benchmark data if the plant is operated very well.

These recommendations are transferred via the data transfer unit back to data communication unit.

The present invention is now explained by examples shown in figures **1 - 3**. The examples do not limit the scope of protection of the present invention.
- **Figure 1**: shows an example how the recommendations are automatically provided.
- **Figure 2**: shows an example of the calculations performed in the data concentration unit.
- **Figure 3 a-f**: shows an example how the recommendations are generated.

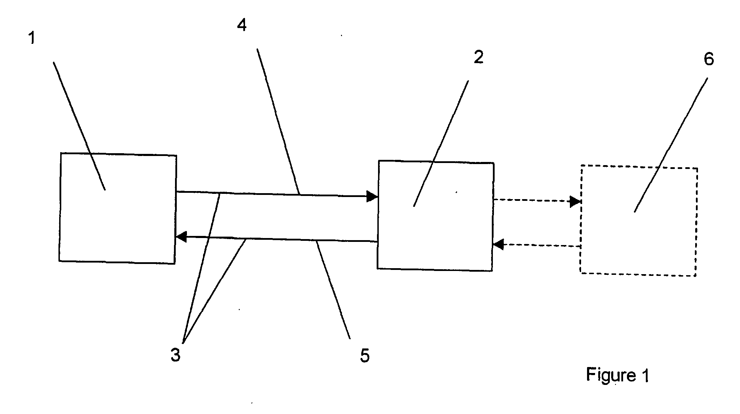

In **Figure 1** the process according to the present invention is shown. The plant-and/or process- relevant data is inserted into the data communication unit 1. In the present examples, the type of treatment steps of the waste water treatment plant, the Food (F)/Mass(M) ratio, the hydraulic load, the dry solids in the aerobic treatment step, the speed of the primary and secondary clarifiers, the recirculation rate between aerobic treatment unit and secondary clarification, the pollution; i.e. the chemical- and biological oxygen demand, the phosphor- and the nitrogen concentration as well as the sludge age are provided. This data 4 is transferred via the data transfer unit 3 to the data concentration unit 2. The data concentration unit can be connected to one or more data bases 6. In the data concentration unit 2 the data 4 is processed and the following indices and parameters are calculated. The indices and parameters are subsequently compared to historical data, benchmarks and data covering the personal experience of persons skilled in the art. This data is either stored in the data concentration unit 2 or in connected data bases 6. Based on the outcome of the comparison the data concentration unit 2 automatically generates recommendations 5 and provides prognoses 5 about the performance of certain treatment steps or the entire waste water treatment plant and transfers those to the data communication unit 1.

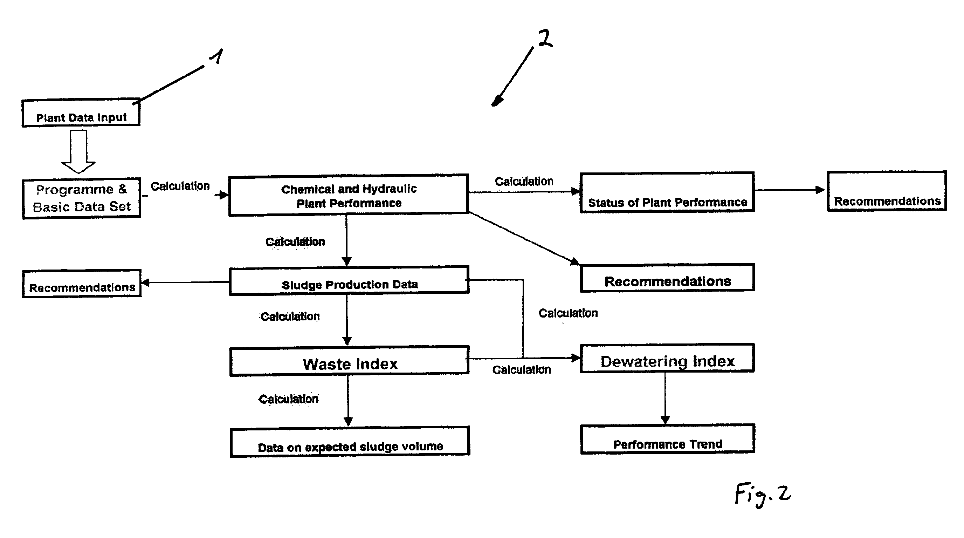

In **Figure 2** an example of the calculations executed in the data concentration unit 2 is shown. The plant data has been inputted into the data communication unit 1.

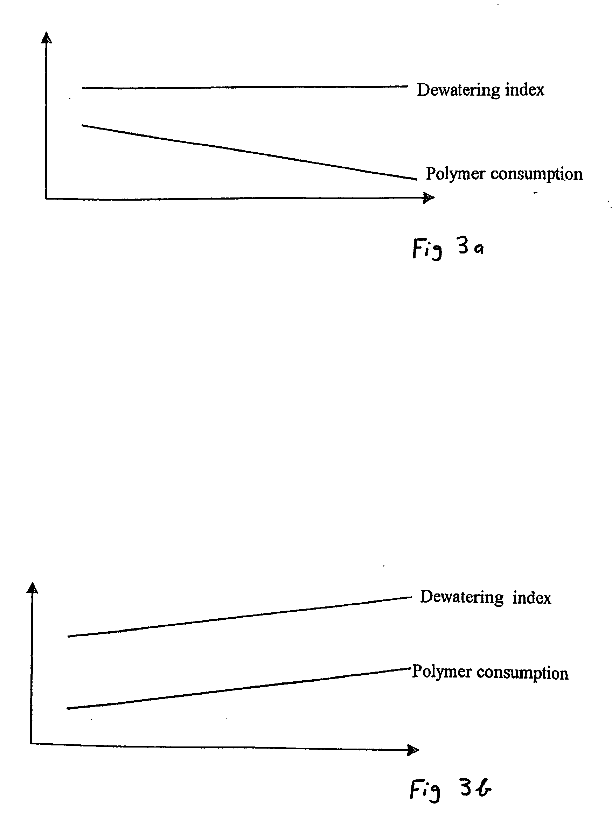

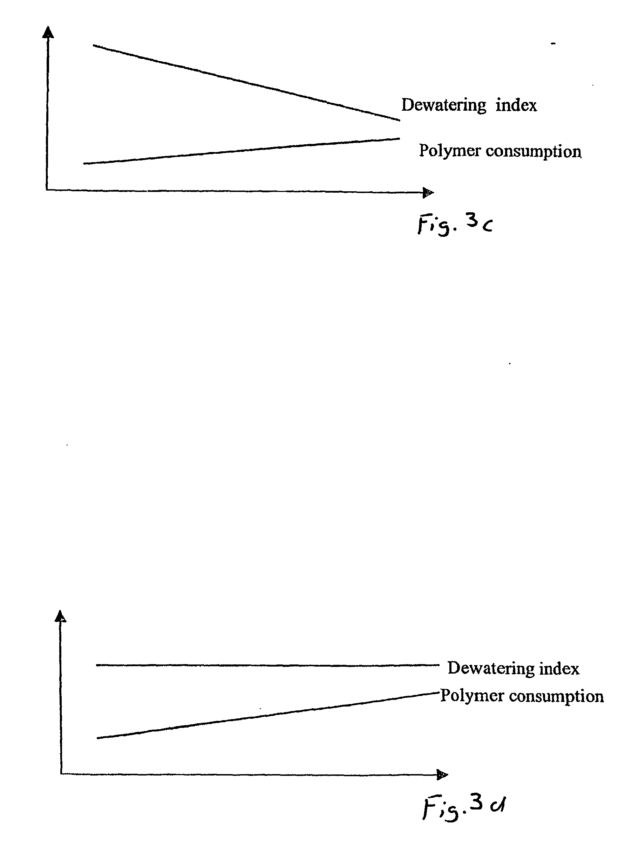

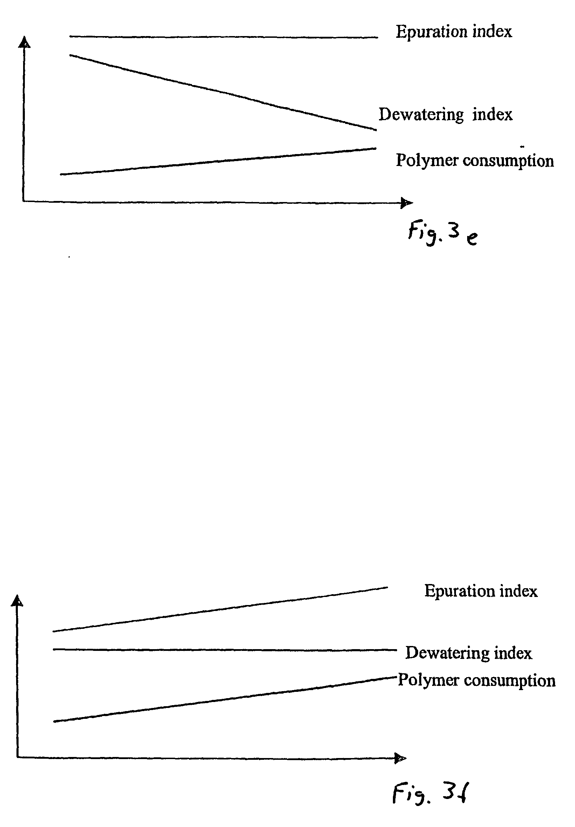

In **Figures 3** **a - f** a trend analysis is shown. Based on the historical data trends for the dewatering index, the polymer consumption (Figures 3a-3f) and the epuration index (Figures 3e, 3f) are calculated. Based on the trend the data concentration unit comes up with the following recommendations and or analysis:

**Figure 3a****.** The dewatering index is stable and the polymer consumption is decreasing. Thus the plant runs well. It means that no parameter that can interfer dewatering has changed but the performance has increased. Recommendation: Continue in that way. Dewatering has been optimised.

**Figure 3b** If the dewatering index increases means that the initial dryness will be difficult to achieve. Recommendation: Use more polymer and/or change the polymer.

**Figure 3c** The polymer is not more adapted to the sludge and/or you have more primary sludge. Recommendation: Change polymer. Try a less cationic one.

**Figure 3d** This graph shows that the operation is wrong. Recommendation: Change operation.

**Figure 3e** Over polymer consumption check another polymer range as your process improves.

**Figure 3f** Wrong data. Recommendation: Check data.

## Claims

1. Process to automatically provide recommendations how to optimize the performance of a waste water treatment plant with a data communication unit (1) and a data concentration unit (2), whereas the data communication unit (1) and the data concentration unit (2) are connected by a data transfer unit (3), the process comprising an unlimited repetition of the following steps:
a) Input of plant- and process- relevant data (4) into the data communication unit (1),
b) Transfer of the process-relevant data (4) from the data communication unit (1) to the data concentration unit (2),
c) Calculation of process relevant parameters and/or indices in the data concentration unit with the data according to step a),
d) Evaluation of the process relevant parameters and/or indices in comparison to data stored in the data concentration unit (2),
e) Provision of recommendations based on step d) and
f) Transfer of recommendations from the concentration unit (2), to the data communication unit (1),
**characterized in that** the step of plant- and process-relevant data (4) comprises:
a. type of treatment steps in the waste water treatment plant,
b. Food/Mass ratio,
c. Hydraulic load,
d. Dry solids,
e. Speed of clarifiers,
f. Recirculation flow rate,
g. Pollution, especially oxygen demand, phosphor, nitrogen and/or
h. Sludge age,
wherein the recommendations are based on a quantitative analysis and also on fuzzy rules based on a qualitative analysis.

2. Process according to claim 1, **characterized in that** the stored data is bench marks, historical data and/or data based on experience.

3. Process according to anyone of the preceding claims, **characterized in, that** the recommendation is qualitative.

4. Process according to claim 3, **characterized in, that** the recommendations are a list of aspects that improve a certain treatment step and/or how a change of a certain parameter will influence the operation of the entire plant.

5. Process according to anyone of the preceding claims, **characterized in, that** the data communication unit (1) and the data concentration unit (2) are operated as separate parts of a network.

6. Process according to anyone of the preceding claims, **characterized in, that** the transferred data is stored in the data concentration unit (2).

## Patentansprüche

1. Prozess zum automatischen Bereitstellen von Empfehlungen zum Optimieren der Leistung einer Abwasserreinigungsanlage mit einer Datenkommunikationseinheit (1) und einer Datenkonzentrationseinheit (2), wobei die Datenkommunikationseinheit (1) und die Datenkonzentrationseinheit (2) über eine Datentransfereinheit (3) verbunden sind, wobei der Prozess weiterhin eine unbegrenzte Wiederholung der folgenden Schritte umfaßt:
a) Eingabe von anlage- und prozessrelevanten Daten (4) in die Datenkommunikationseinheit (1),
b) Transfer der prozessrelevanten Daten (4) von der Datenkommunikationseinheit (1) zu der Datenkonzentrationseinheit (2),
c) Berechnung von prozessrelevanten Parametern und/oder Angaben in der Datenkonzentrationseinheit mit den Daten nach Schritt a),
d) Evaluierung der prozessrelevanten Parameter und/oder Angaben im Vergleich zu in der Datenkonzentrationseinheit (2) gespeicherten Daten,
e) Bereitstellung von Empfehlungen auf der Basis von Schritt d) und
f) Transfer von Empfehlungen von der Konzentrationseinheit (2) zu der Datenkommunikationseinheit (1),
**dadurch gekennzeichnet, dass** der Schritt der anlage- und prozessrelevanten Daten Folgendes umfaßt:
a. Art von Reinigungsschritten in der Abwasserreinigungsanlage,
b. Lebensmittel-Masse-Verhältnis,
c. hydraulische Belastung,
d. trockene Feststoffe,
e. Geschwindigkeit von Klärvorrichtungen,
f. Umlaufströmungsrate,
g. Verunreinigung, insbesondere Sauerstoffbedarf, Phosphor, Stickstoff und/oder
h. Abwasserschlammalter,
wobei die Empfehlungen auf einer quantitativen Analyse basieren und auch auf Fuzzy-Regeln auf der Basis einer quantitativen Analyse.

2. Prozess nach Anspruch 1, **dadurch gekennzeichnet, dass** die gespeicherten Daten Benchmarks, historische Daten und/oder auf Erfahrung basierende Daten sind.

3. Prozess nach einem der vorhergehenden Ansprüche, **dadurch gekennzeichnet, dass** die Empfehlung qualitativ ist.

4. Prozess nach Anspruch 3, **dadurch gekennzeichnet, dass** die Empfehlungen eine Liste von Aspekten sind, die einen bestimmten Reinigungsschritt verbessern und/oder wie eine Änderung eines bestimmten Parameters den Betrieb der ganzen Anlage beeinflussen wird.

5. Prozess nach einem der vorhergehenden Ansprüche, **dadurch gekennzeichnet, dass** die Datenkommunikationseinheit (1) und die Datenkonzentrationseinheit (2) als separate Teile eines Netzes betrieben werden.

6. Prozess nach einem der vorhergehenden Ansprüche, **dadurch gekennzeichnet, dass** die transferierten Daten in der Datenkonzentrationseinheit (2) gespeichert werden.

## Revendications

1. Procédé pour mettre à disposition automatiquement des recommandations sur la façon d'optimiser les performances d'une installation de traitement des eaux usées à l'aide d'une unité (1) de communication de données et d'une unité (2) de concentration de données, l'unité (1) de communication de données et l'unité (2) de concentration de données étant reliées par une unité (3) de transfert de données, le procédé comportant une répétition illimitée des étapes suivantes :
a) saisie de données (4) concernant l'installation et le procédé dans l'unité (1) de communication de données,
b) transfert des données (4) concernant le procédé de l'unité (1) de communication de données à l'unité (2) de concentration de données,
c) calcul de paramètres et/ou d'indices concernant le procédé dans l'unité de concentration de données à l'aide des données de l'étape a),
d) évaluation des paramètres et/ou des indices concernant le procédé en comparaison des données stockées dans l'unité (2) de concentration de données,
e) mise à disposition de recommandations sur la base de l'étape d) et
f) transfert des recommandations de l'unité (2) de concentration de données à l'unité (1) de communication de données,
**caractérisé en ce que** l'étape des données (4) concernant l'installation et le procédé comporte :
a. le type d'étapes de traitement dans l'installation de traitement des eaux usées,
b. le rapport nourriture/masse,
c. la charge hydraulique,
d. les solides secs,
e. la vitesse des clarificateurs,
f. le débit de recirculation,
g. la pollution, en particulier la demande en oxygène, le phosphore, l'azote et/ou
h. l'âge des boues,
les recommandations étant basées sur une analyse quantitative et également sur des règles floues basées sur une analyse qualitative.

2. Procédé selon la revendication 1, **caractérisé en ce que** les données stockées sont des références, des données historiques et/ou des données basées sur l'expérience.

3. Procédé selon l'une quelconque des revendications précédentes, **caractérisé en ce que** la recommandation est qualitative.

4. Procédé selon la revendication 3, **caractérisé en ce que** les recommandations constituent une liste d'aspects qui améliorent une certaine étape de traitement et/ou la façon dont une modification d'un certain paramètre influera sur le fonctionnement de l'installation tout entière.

5. Procédé selon l'une quelconque des revendications précédentes, **caractérisé en ce que** l'unité (1) de communication de données et l'unité (2) de concentration de données sont exploitées comme des parties distinctes d'un réseau.

6. Procédé selon l'une quelconque des revendications précédentes, **caractérisé en ce que** les données transférées sont stockées dans l'unité (2) de concentration de données.
